# EUROPEAN PATENT SPECIFICATION

(11) **EP 3 226 621 B1**
(45) Date of publication and mention of the grant of the patent: **25.12.2019**
(21) Application number: 17158538.3
(22) Date of filing: 28.02.2017
(51) Int. Cl.: H04W 48/16, H04J 11/00

(54) **METHODS AND DEVICES FOR CELL SEARCH**
VERFAHREN UND VORRICHTUNGEN ZUR ZELLSUCHE
PROCÉDÉS ET DISPOSITIFS DE RECHERCHE DE CELLULES

(30) Priority: 31.03.2016 US 201615086252
(43) Date of publication of application: 04.10.2017
(73) Proprietor: Intel IP Corporation, Santa Clara, CA 95054 (US)
(72) Inventor: MOUSTAFA, Ahmed, 82008 Unterhaching/München (DE); DORSEY, Donald, Vernon Hills, IL Illinois 60061 (US)
(74) Representative: Viering, Jentschura & Partner mbB Patent- und Rechtsanwälte

(56) References cited:
- EP-A1- 2 945 442
- US-A1- 2012 264 425
- US-A1- 2013 028 119
- US-A1- 2013 121 218

## Description

### Technical Field

Various embodiments relate generally to methods and devices for cell search.

### Background

Mobile terminals may need to perform cell search to detect nearby network cells in many cellular communication standards. The mobile terminal and/or the cellular network may apply cell search results as part of various cellular mobility procedures, such as cell selection/reselection, handover, network scan/selection, measurement reporting, etc.

A mobile terminal may search a set of target center frequencies during cell search in order to detect and identify proximate network cells, where the target center frequency set may include e.g. all supported center frequencies (e.g. for network scan) or e.g. a subset of the supported center frequencies (e.g. for measurement reporting). Each target center frequency may be located on a predefined operating band and may be uniquely identified by a specific channel number. A mobile terminal performing cell search may iterate through each band and perform cell search on each target center frequency contained therein to obtain cell search results (corresponding to the connected target center frequency), and may continue searching the target center frequency set on a per-band basis until e.g. the mobile terminal detects a suitable cell or finishes searching all of the target center frequency set.

In particular for large target center frequency sets, cell search may have a high time and power penalty due to the need for individually analyzing each target center frequency to detect any cells contained thereon. The patent application US 2013/028119 A1 discloses a UE_B that detects presence of PLMN in a band B and that the UE_B selects a part of a band A that is overlapped by UL band B to omit for searching by the UE_B.

The invention is set out in the claims.

### Brief Description of the Drawings

In the drawings, like reference characters generally refer to the same parts throughout the different views. The drawings are not necessarily to scale, emphasis instead generally being placed upon illustrating the principles of the invention. In the following description, various embodiments of the invention are described with reference to the following drawings, in which:
FIG. **1** shows a mobile communication network;
FIG. **2** shows an internal configuration of a mobile terminal device;
FIG. **3** shows cell search circuitry of a baseband modem;
FIG. **4** shows a table specifying LTE carrier channel parameters;
FIG. **5** shows a table specifying UMTS carrier channel parameters;
FIG. **6** shows a method of performing cell search;
FIG. **7** shows a first frequency diagram illustrating cell search of different operating bands;
FIG. **8** shows a second frequency diagram illustrating cell search of different operating bands;
FIG. **9** shows a table specifying duplex spacing for LTE carrier channels;
FIG. **10** shows a table specifying duplex spacing for UMTS carrier channels;
FIG. **11** shows a third frequency diagram illustrating cell search of different operating bands
FIG. **12** shows a frequency diagram illustrating overlapping spectrum of detected cells;
FIG **13** shows a method for identifying occupied spectrum of cells detected on previously searched operating bands;
FIG. **14** shows a first method of performing radio communications; and
FIG. **15** shows a second method of performing radio communications.

### Description

The following detailed description refers to the accompanying drawings that show, by way of illustration, specific details and embodiments in which the invention may be practiced.

The word "exemplary" is used herein to mean "serving as an example, instance, or illustration". Any embodiment or design described herein as "exemplary" is not necessarily to be construed as preferred or advantageous over other embodiments or designs.

The words "plural" and "multiple" in the description and the claims expressly refer to a quantity greater than one. Accordingly, any phrases explicitly invoking the aforementioned words (e.g. "a plurality of [objects]", "multiple [objects]") referring to a quantity of objects expressly refers more than one of the said objects. The terms "group (of)", "set [of]", "collection (of)", "series (of)", "sequence (of)", "grouping (of)", etc., and the like in the description and in the claims, if any, refer to a quantity equal to or greater than one, i.e. one or more.

It is appreciated that any vector and/or matrix notation utilized herein is exemplary in nature and is employed solely for purposes of explanation. Accordingly, it is understood that the approaches detailed in this disclosure are not limited to being implemented solely using vectors and/or matrices, and that the associated processes and computations may be equivalently performed with respect to sets, sequences, groups, etc., of data, observations, information, signals, etc. Furthermore, it is appreciated that references to a "vector" may refer to a vector of any size or orientation, e.g. including a 1x1 vector (e.g. a scalar), a 1xM vector (e.g. a row vector), and an Mx1 vector (e.g. a column vector). Similarly, it is appreciated that references to a "matrix" may refer to matrix of any size or orientation, e.g. including a 1x1 matrix (e.g. a scalar), a 1xM matrix (e.g. a row vector), and an Mxl matrix (e.g. a column vector).

A "circuit" as used herein is understood as any kind of logic-implementing entity, which may include special-purpose hardware or a processor executing software. A circuit may thus be an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions which will be described below in further detail may also be understood as a "circuit". It is understood that any two (or more) of the circuits detailed herein may be realized as a single circuit with substantially equivalent functionality, and conversely that any single circuit detailed herein may be realized as two (or more) separate circuits with substantially equivalent functionality. Additionally, references to a "circuit" may refer to two or more circuits that collectively form a single circuit.

As used herein, "memory" may be understood as a non-transitory computer-readable medium in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, etc., or any combination thereof. Furthermore, it is appreciated that registers, shift registers, processor registers, data buffers, etc., are also embraced herein by the term memory. It is appreciated that a single component referred to as "memory" or "a memory" may be composed of more than one different type of memory, and thus may refer to a collective component comprising one or more types of memory. It is readily understood that any single memory component may be separated into multiple collectively equivalent memory components, and vice versa. Furthermore, while memory may be depicted as separate from one or more other components (such as in the drawings), it is understood that memory may be integrated within another component, such as on a common integrated chip.

The term "base station" used in reference to an access point of a mobile communication network may be understood as a macro base station, micro base station, Node B, evolved NodeBs (eNB), Home eNodeB, Remote Radio Head (RRH), relay point, etc. As used herein, a "cell" in the context of telecommunications may be understood as a sector served by a base station. Accordingly, a cell may be a set of geographically co-located antennas that correspond to a particular sectorization of a base station. A base station may thus serve one or more cells (or sectors), where each cell is characterized by a distinct communication channel. Furthermore, the term "cell" may be utilized to refer to any of a macrocell, microcell, femtocell, picocell, etc.

For purposes of this disclosure, radio communication technologies may be classified as one of a Short Range radio communication technology, Metropolitan Area System radio communication technology, or Cellular Wide Area radio communication technology. Short Range radio communication technologies include Bluetooth, WLAN (e.g. according to any IEEE 802.11 standard), and other similar radio communication technologies. Metropolitan Area System radio communication technologies include Worldwide Interoperability for Microwave Access (WiMax) (e.g. according to an IEEE 802.16 radio communication standard, e.g. WiMax fixed or WiMax mobile) and other similar radio communication technologies. Cellular Wide Area radio communication technologies include GSM, UMTS, LTE, LTE-Advanced (LTE-A), CDMA, WCDMA, General Packet Radio Service (GPRS), Enhanced Data Rates for GSM Evolution (EDGE), High Speed Packet Access (HSPA), HSPA Plus (HSPA+), and other similar radio communication technologies. Cellular Wide Area radio communication technologies also include "small cells" of such technologies, such as microcells, femtocells, and picocells. Cellular Wide Area radio communication technologies may be generally referred to herein as "cellular" communication technologies. It is understood that exemplary scenarios detailed herein are demonstrative in nature, and accordingly may be similarly applied to various other mobile communication technologies, both existing and not yet formulated, particularly in cases where such mobile communication technologies share similar features as disclosed regarding the following examples.

The term "network" as utilized herein, e.g. in reference to a communication network such as a mobile communication network, encompasses both an access section of a network (e.g. a radio access network (RAN) section) and a core section of a network (e.g. a core network section). The term "radio idle mode" or "radio idle state" used herein in reference to a mobile terminal refers to a radio control state in which the mobile terminal is not allocated at least one dedicated communication channel of a mobile communication network. The term "radio connected mode" or "radio connected state" used in reference to a mobile terminal refers to a radio control state in which the mobile terminal is allocated at least one dedicated uplink communication channel of a mobile communication network. Unless explicitly specified, the term "transmit" encompasses both direct and indirect transmission. Similarly, the term "receive" encompasses both direct and indirect reception unless explicitly specified.

Mobile terminals may require extended durations of time and expend considerable power during cell search procedures. In particular for cell search contexts such as Public Land Mobile Network (PLMN) scan and cell selection, a mobile terminal may need to search a relatively large set of target center frequencies in order to perform cell search which may accordingly be accompanied by high time and power penalties. For example, during a PLMN scan a mobile terminal may have limited knowledge as to which spectrum is allocated to certain Mobile Network Operators (MNOs), and in some cases may need to perform cell search on all supported frequencies in order to identify a cell of a desired PLMN.

The target center frequencies for cell search may be distributed across a plurality of predefined operating bands, where each operating band may contain a plurality of center frequencies that are each uniquely identified with a channel number. During cell search, a mobile terminal may sequentially search each relevant operating band (i.e. each operating band that contains at least one target center frequency) by incrementing through the target center frequencies on the operating band, isolating a received signal at each target center frequency, and processing the isolated signal to detect any cells located at each target center frequency. A mobile terminal may thus develop a set of search results for each searched target center frequency that detail any detected cells, which may be subsequently utilized for later mobility procedures such as cell measurement, cell selection/reselection, handover, network selection, etc.

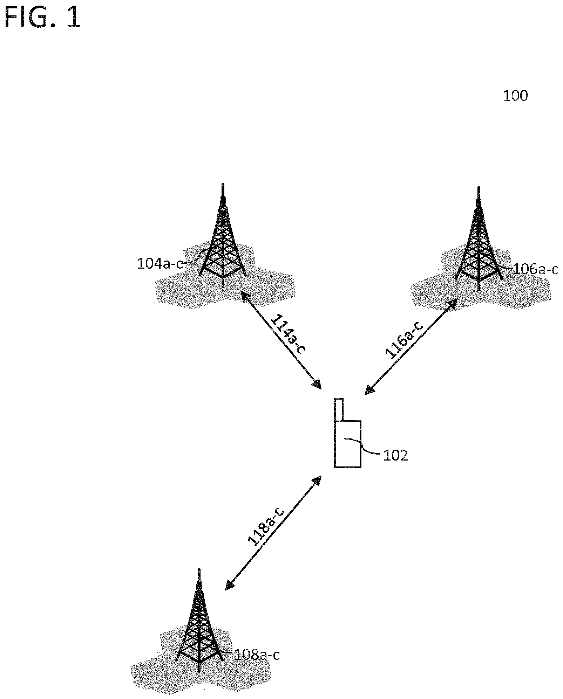

FIG. **1** shows an exemplary scenario depicting a cell search context for mobile terminal **102** in cellular network **100.** In the exemplary scenario of FIG. **1**, mobile terminal **102** may be located proximate to base stations **104, 106,** and **108.** Each of base stations **104-108** may be sectorized (e.g. with respective sectorized antenna systems) in to multiple cells such as cells **104a, 104b,** and **104c** for base station **104,** cells **106a, 106b,** and **106c** for base station **106**, and cells **108a, 108b,** and **108c** for base station **108.** The wireless channels **114a-114c, 116a-116c,** and **118a-118c** may represent the discrete wireless channels between each of respective cells **104a-104c, 106a-106c,** and **108a-108c.**

Mobile terminal **102** may perform cell search by searching for cells on each target center frequency of the target center frequency set. In the exemplary context of FIG. **1**, each of cells **104a-104c, 106a-106c,** and **108a-108c** may each utilize a first target center frequency for downlink transmissions. Although not explicitly shown in FIG. **1**, each of base stations **104-108** may additionally include cells **104d-104f** for base station **104**, cells **106d-106f** for base station **106**, and cells **108d-108f** for base station **108**, which may each utilize a second target center frequency for downlink transmissions, and so forth for a third, fourth, etc., target center frequency. Mobile terminal **102** may search each of the target center frequencies in order to detect all proximate cells transmitting on each target center frequency and thus produce cell search results for use in various cellular mobility procedures.

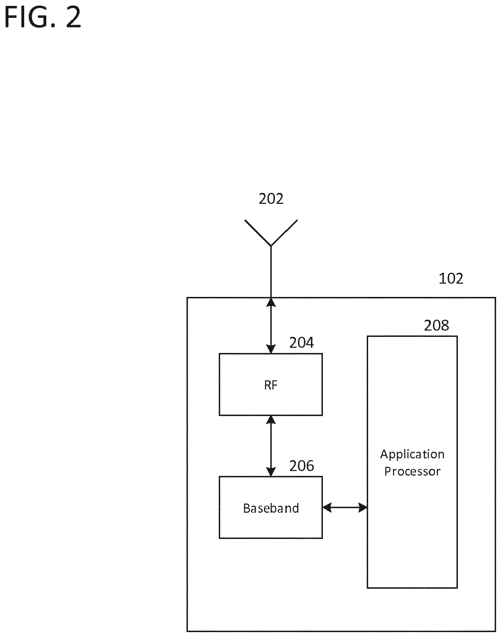

FIG. **2** shows an internal configuration of mobile terminal **102**. As shown in FIG. **2**, mobile terminal **102** may include antenna system **202**, RF transceiver **204**, baseband subsystem **206**, and application processor **208**. Mobile terminal **102** may include one or more additional components not explicitly depicted in FIG. **2**, such as additional hardware, software, or firmware elements including processors/microprocessors, controllers/microcontrollers, memory, other specialty or generic hardware/processors/circuits, etc., in order to support a variety of additional operations. Mobile terminal **102** may also include a variety of user input/output devices (display(s), keypad(s), touchscreen(s), speaker(s), external button(s), camera(s), microphone(s), etc.), peripheral device(s), memory, power supply, external device interface(s), subscriber identity module(s) (SIM) etc.

In an abridged operational overview, mobile terminal **102** may be configured to transmit and receive wireless signals according to one or more radio access technologies (RATS), including any one or more of LTE, WLAN (e.g. WIFI), UMTS, GSM, Bluetooth, etc. The radio access technologies supported by mobile terminal **102** may be dictated by one or more Subscriber Identity Modules (SIMs) included in mobile terminal **102** (not explicitly shown in FIG. **2**). Although FIG. **2** depicts antenna system **202**, RF transceiver **204**, and baseband subsystem **206** each as a single component, such is not limiting and mobile terminal **102** may accordingly include separate components for each radio access technology, such as e.g. a dedicated LTE antenna, LTE RF transceiver, and/or dedicated LTE baseband modem for LTE reception and transmission, a dedicated UMTS antenna, UMTS RF transceiver, and/or UMTS baseband modem for UMTS reception and transmission, a dedicated WiFi antenna, WiFi RF transceiver, and/or WiFi baseband modem for WiFI reception and transmission, etc., in which case antenna system **202**, RF transceiver **204**, and baseband system **206** may each be collectively composed of the separate dedicated components for each supported radio access technology. Alternatively, one or more components of mobile terminal **102** as depicted in FIG. **2** may be shared between different radio access technologies, such as e.g. by sharing antenna system **202** between multiple different radio access technologies, e.g. by employing RF transceiver **204** as a multi-RAT RF transceiver, e.g. by employing baseband system **206** as a multi-mode baseband modem. Accordingly, many such variations regarding the radio access technologies supported by antenna system **202**, RF transceiver **204**, and baseband system **206** are within the scope of the disclosure.

Further to the abridged operational overview, RF transceiver **204** may transmit and receive radio frequency wireless signals via antenna system **202**, which may be implemented as e.g. a single antenna or an antenna array composed of multiple antennas. In the downlink direction, RF transceiver **204** may receive analog radio frequency signals from antenna system **202** and mix the analog radio frequency signals to baseband frequencies for provision to baseband system **206**. RF transceiver **204** may thus include various reception circuitry components, which may include amplification circuitry such as a Low Noise Amplifier (LNA) to amplify analog radio frequency signals received from antenna system **202** and analog mixing circuitry to mix the amplified radio frequency signals to baseband frequencies (including e.g. intermediate frequencies) before provision to baseband system **206**. In the uplink direction, RF transceiver **204** may receive analog baseband signals from baseband system **206** and mix the analog baseband signals to radio frequencies for provision to antenna system **202**. RF transceiver **204** may thus also include various transmission circuitry components configured to transmit internally received signals, such as e.g. baseband signals provided by baseband system **206**, which may include mixing circuitry to modulate baseband signals received from baseband system **206** onto one or more radio frequency carriers and amplification circuitry such as a Power Amplifier (PA) to amplify the modulated radio frequency signals before transmission via antenna system **202**.

Baseband system **206** may manage the wireless communication functions of mobile terminal **102** by operating in conjunction with RF transceiver **204** and antenna system **202** to transmit and receive uplink and downlink signals in accordance with the various supported radio access technologies. Accordingly, baseband system **206** may be responsible for the various baseband signal processing operations for downlink (baseband signals provided by RF transceiver **204** following wireless reception by antenna system **202**) and uplink (baseband signals to RF transceiver **204** for wireless transmission via antenna system **202**) data.

Depending on the supported radio access technologies, baseband system **206** may be implemented as one or more baseband modems, such as one multi-mode baseband modem (supporting multiple radio access technologies), multiple dedicated baseband modems (each supporting a single radio access technology), or a combination thereof. Each baseband modem of baseband system **206** may thus be configured to support one or more radio access technologies and may be divided into a physical layer (PHY) subsystem (Layer 1) and a protocol stack subsystem (Layers 2 and 3).

The PHY subsystem of each baseband modem of baseband system **206** may be processing circuitry configured to perform control and processing of physical layer mobile communication functions, including error detection, forward error correction encoding/decoding, channel coding and interleaving, physical channel modulation/demodulation, physical channel mapping, radio measurement and search, frequency and time synchronization, antenna diversity processing, power control and weighting, rate matching, retransmission processing, etc., in accordance with the Layer 1 communication protocols of each respective supported radio access technology. The PHY subsystem of each baseband modem may be structurally realized as hardware logic, e.g. as an integrated circuit or FPGA, as software logic, e.g. as program code defining arithmetic, control, and I/O instructions stored in a non-transitory computer-readable storage medium and executed on a processor, or as a combination of hardware and software logic. For example, the PHY subsystem of each baseband modem may be embodied as a PHY controller (e.g. a processor) and dedicated hardware circuitry, where each PHY controller is configured to control the respective dedicated hardware circuitry to perform the various signal processing functions of the PHY subsystem according to the corresponding radio access technology protocols.

The protocol stack subsystem of each baseband modem may be processing circuitry responsible for the Layer 2 and Layer 3 functionality of the corresponding radio access technologies. In an LTE context, the protocol stack subsystem may be responsible for Medium Access Control (MAC), Radio Link Control (RLC), Packet Data Convergence Protocol (PDCP), Radio Resource Control (RRC), Non-Access Stratum (NAS), and Internet Protocol (IP) entity processes. Each protocol stack subsystem may be structurally realized as hardware logic, e.g. as an integrated circuit or FPGA, as software logic, e.g. as program code defining arithmetic, control, and I/O instructions stored in a non-transitory computer-readable storage medium and executed on a processor, or as a combination of hardware and software logic. For example, each protocol stack subsystem may be a protocol processor configured to control wireless communications of mobile terminal **102** according to the Layer 2 and Layer 3 protocols of the corresponding radio access technology protocols.

Each baseband modem of baseband system **206** may thus operate according to the PHY and protocol stack control logic provided by the respective PHY and protocol stack subsystems defined for each supported radio access technology. Mobile terminal **102** may thus transmit and receive uplink and downlink wireless communication data for each supported radio access technology via such an interaction between baseband system **206**, RF transceiver **204**, and antenna system **202**.

Baseband system **206** may additionally interface with application processor **208**, which may be implemented as a Central Processing Unit (CPU) and configured to execute various applications and/or programs of mobile terminal **102**, such as e.g. an Operating System (OS), a User Interface (UI) for supporting user interaction with mobile terminal **102**, and/or various user applications (corresponding to program code stored in a memory component of mobile terminal **102**; not explicitly shown in FIG. **2**). Application processor **208** may utilize the interface with baseband system **206** to transmit and receive user data such as voice data, video data, messaging data, application data, basic Internet/web access data, etc., over the one or more radio access technologies supported by baseband system **206**. Application processor **208** may also be configured to control one or more further components of mobile terminal **102**, such as user input/output devices (display(s), keypad(s), touchscreen(s), speaker(s), external button(s), camera(s), microphone(s), etc.), peripheral devices, memory, power supply, external device interfaces, etc. Although depicted separately in FIG. **2**, part or all of the detailed functionality of baseband system **206** may be implemented at application processor **208**, such as by executing the functionality of baseband system **206** as software executed by the processor core of application processor **208**. Alternatively, baseband system **206** and application processor **208** may be integrated into a single chip. Such variations are recognized as providing largely equivalent functionality and the disclosure is thus not limited to any specific architecture.

Baseband system **206** may be configured to perform cell searches in order to support cellular mobility procedures such as cell selection/reselection, handover, network scan/selection, measurement reporting, etc., according to the corresponding communication protocols of each supported radio access technology. As previously indicated, baseband system **206** may perform cell searches by searching target center frequencies on a plurality of operating bands, and may search each target center frequency by isolating the received signal (received via RF transceiver **204** and antenna system **202**) at a given target center frequency and processing the isolated signal to detect any cells at the target center frequency. Baseband system **206** may obtain a set of search results for each searched target center frequency that detail any detected cells.

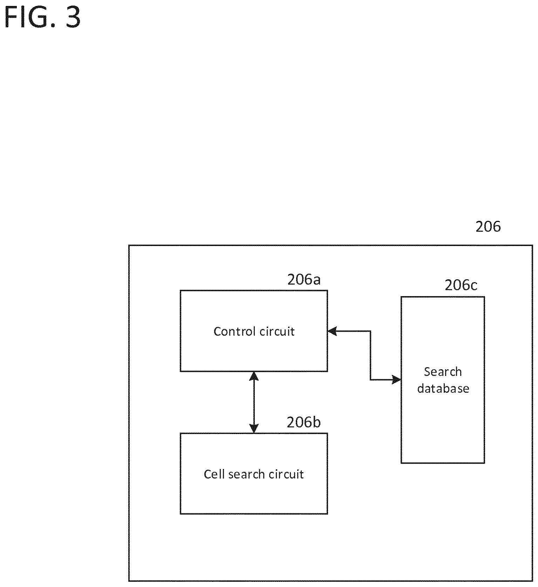

Baseband system **206** may thus include control circuit **206a,** cell search circuit **206b,** and search database **206c** as shown in FIG. **3**. Cell search circuit **206b** may be configured to perform the signal processing functions involved in cell search while control circuit **206a** may be configured to manage cell search operations and store search results reported by cell search circuit **206b** at search database **206c**. Control circuit **206a** and cell search circuit **206b** may be structurally realized as hardware logic, e.g. as an integrated circuit or FPGA, as software logic, e.g. as program code defining arithmetic, control, and I/O instructions stored in a non-transitory computer-readable storage medium and executed on a processor, or as a combination of hardware and software logic. Search database **206b** may be realized as a memory device.

Control circuit **206a** may be configured to trigger cell search at cell search circuit **206b.** For example, in a UMTS context control circuit **206a** may be a PHY (Layer 1) controller that is part of the UMTS PHY subsystem of baseband system **206**. Alternatively, in an LTE context control circuit **206a** may be an RRC entity that is part of the LTE protocol stack subsystem. Various other implementations of control circuit **206a** are within the scope of the disclosure, and may depend on the applicable radio access technology. Control circuit **206a** may thus be any circuit entity that oversees cell search operations. While FIG. **3** depicts control circuit **206a,** cell search circuit **206b,** and search database **206c** as separate components, skilled persons will appreciate the potential to integrate control circuit **206a,** cell search circuit **206b,** and search database **206c** into a single component, e.g. a single circuit or single processor and associated memory.

Control circuit **206a** may trigger cell search at cell search circuit **206b** based on certain triggering criteria. For example, control circuit **206a** may trigger cell search at cell search circuit **206b** during a power-up sequence of mobile terminal **102**, which may include triggering a cell search as part of a PLMN scan or initial cell selection. Alternatively, control circuit **206a** may trigger cell search at cell search circuit **206b** based on previously obtained radio measurements, such as if previously obtained radio measurements meet triggering criteria for triggering cell reselection or cell measurement. Alternatively, control circuit **206a** may trigger cell search at cell search circuit **206b** as part of handover or measurement reporting, such as if a cellular network provides a cell measurement instruction or if a cell measurement condition provided by the cellular network meets triggering criteria for measurement reporting. Control circuit **206a** may thus trigger cell search at cell search circuit **206b** for any of a variety of different reasons.

Upon receiving a cell search request from control circuit **206a,** cell search circuit **206b** may perform cell search on a set of target center frequencies. As previously indicated, each center frequency may be located on an operating band, where each radio access technology may have a predefined set of operating bands and associated center frequencies. Control circuit **206a** may thus provide cell search circuit **206b** with a target center frequency set for each relevant operating band, whereafter cell search circuit **206b** may perform cell search on each of the target center frequencies for each operating band. As cells may be detected via downlink transmissions, each of the target center frequencies may be a downlink center frequency of the corresponding operating band (but may physically fall within uplink center frequencies of other operating bands). Control circuit **206a** may provide cell search circuit with target center frequencies for operating bands of only a single radio access technology or may provide cell search circuit with target center frequencies for operating bands of multiple radio access technologies.

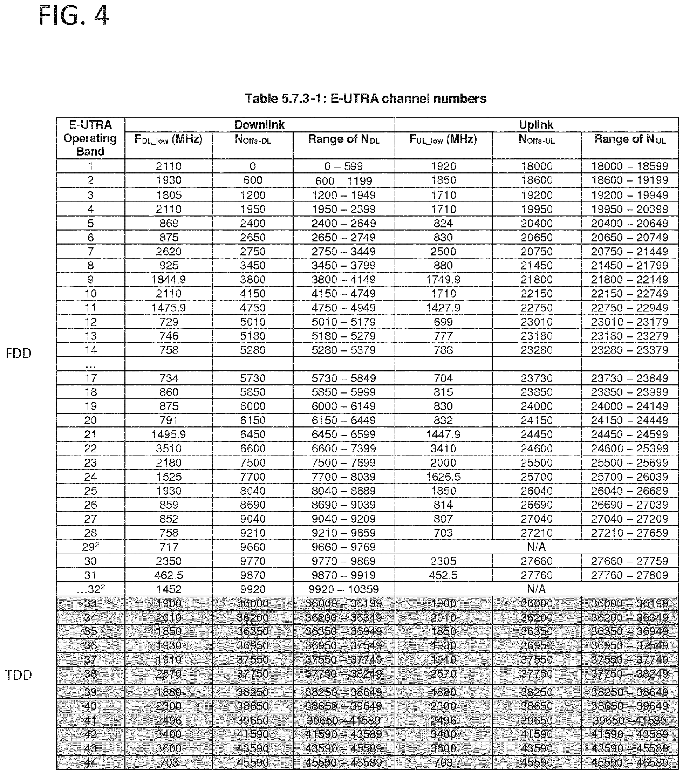

The operating bands and associated center frequencies may be predefined by standardization entities for each radio access technology. For example, FIG. **4** shows Table 5.7.3-1 "E-UTRA channel numbers" from 3GPP TS 36.101, "User Equipment (UE) radio transmission and reception", V 12.7.0 (Release 12), ("3GPP TS 36.101"), which shows operating bands and center frequencies as specified by the 3GPP for LTE networks (with added shading and labels to indicate duplexing mode). As shown in FIG. **4**, the 3GPP has specified 44 total operating bands, which each contain a plurality of center frequencies that are each uniquely identified by an evolved UMTS Terrestrial Radio Access (EUTRA) Absolute Radio Frequency Channel Number (EARFCN). In accordance with the LTE standard defined by the 3GPP, the center frequencies may be spaced on a 100 kHz grid, i.e. a 100 kHz raster, where each center frequency gives a potential center frequency employed by an LTE cell.

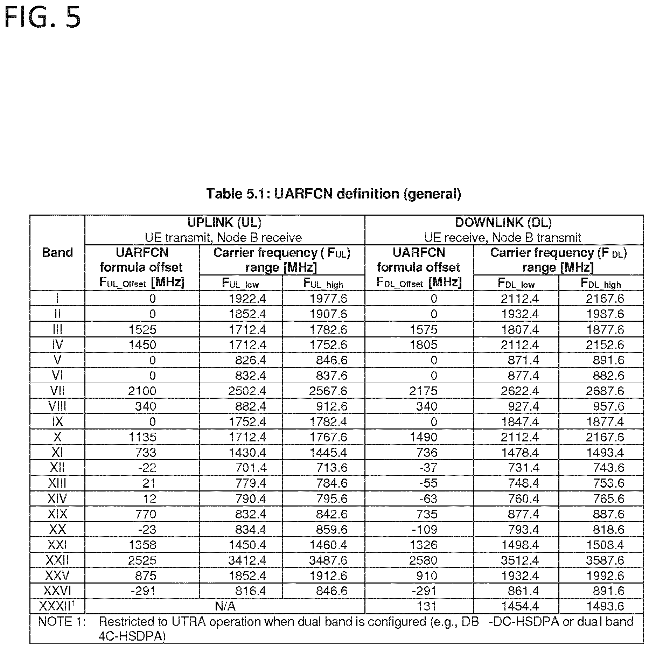

Center frequencies may be similarly defined by operating band and channel number of other radio access technologies. For example, FIG. **5** shows Table 5.1: "UARFCN definition (general)" from 3GPP TS 25.101, "User Equipment (UE) radio transmission and reception (FDD)", V 13.1.0 (Release 13) ("3GPP TS 25.101"), which details operating bands and center frequencies (each identified with a UMTS Absolute Radio Frequency Channel Number (UARFCN)) as specified by the 3GPP for UMTS. Similar center frequency definitions are provided by 3GPP for GSM and may be provided by various other standardization entities for non-3GPP radio access technologies. In accordance with the UMTS standard defined by the 3GPP, the center frequencies may be spaced on a 200 kHz grid, i.e. a 200 kHz raster, where each center frequency gives a potential center frequency employed by an UMTS cell. Similar operating bands and associated center frequencies may be defined for any radio access technology, such as e.g. GSM in addition to any number of non-3GPP radio access technologies. The functionality detailed below regarding mobile terminal **102** is thus considered demonstrative in nature and may be readily applied to any one or more radio access technologies.

During cell search, cell search circuit **206b** may only need to search downlink center frequencies, i.e. center frequencies that are utilized by cells for downlink transmissions. Such may be particularly applicable for Frequency Division Duplexing (FDD) operating bands, which are each composed of an uplink and downlink subband that are separated by a duplexing frequency distance. FDD cells may thus utilize the paired downlink spectrum for downlink transmissions while mobile terminals may utilize the paired uplink spectrum for uplink transmissions. Such FDD operating bands are indicated in FIG. **4**, while FIG. **5** contains only UMTS FDD operating bands. In contrast, TDD operating bands may utilize the same center frequency (and surrounding cell bandwidth) for both uplink and downlink transmissions in an alternating manner in time.

As can be seen in FIGs. **4** and **5**, operating bands of different radio access technologies may overlap in physical spectrum, such as e.g. LTE Operating Band 1 and UMTS Operating Band I. Furthermore, operating bands of the same radio access technology may also overlap in spectrum, such as e.g. the uplink subband of LTE Operating Band 1 and the downlink subband of LTE Operating Band 2 or e.g. between FDD and TDD operating bands that share the same physical spectrum. For purposes of this description, such center frequencies may be considered different center frequencies in a logical sense (as the center frequencies are logically different on the basis of differing channel numbers) that share the same physical frequency.

As a result of this spectral overlap between differing operating bands, cell search circuit **206b** may be assigned to search the same spectrum multiple times during search of different operating bands (of the same or different radio access technology). For example, if assigned to successively search LTE Operating Band 1 and UMTS Operating Band I, cell search circuit **206b** may perform cell search on center frequencies that share the same physical spectrum and/or closely neighbor one another.

In many cases, it may not be necessary for cell search circuit **206b** to perform a repeated search on the same physical spectrum, in particular when cell search circuit **206b** detects a cell that is occupying the physical spectrum during search of the earlier searched band. If cell search circuit **206b** detects a cell on a first band that is occupying a block of physical spectrum, it may not be possible for any cells on a different band to occupy the same physical spectrum (although multiple cells on a common band may share spectrum according to the a frequency re-use factor). Accordingly, if cell search circuit **206b** detects an active cell on a first operating band that is occupying a given block of occupied spectrum, cell search circuit **206b** may not need to re-search the block of occupied spectrum during search of a second operating band (in addition to any other unsearched bands), and accordingly may "skip" search of all center frequencies in the second operating band that are located within the occupied spectrum of the detected cell (which may include spectrum that directly overlaps with the operating spectrum of the detected cell and spectrum that is close enough to the operating spectrum of the detected cell that it is not possible for another cell to exist there).

In order to improve search completion time and conserve battery power, baseband system **206** may selectively skip cell search of certain target center frequencies if a cell was previously detected as occupying the same physical spectrum. For example, cell search circuit **206b** may detect one or more (if any) cells on each of a plurality of searched bands. Control circuit **206a** may then determine the spectrum that is occupied by each of the detected cells, and aggregate the spectrum to determine the overall occupied spectrum. When control circuit **206a** prepares to assign target center frequencies to cell search circuit **206b** for searching the next targeted band, control circuit **206a** may identify the overall occupied spectrum, determine whether any center frequencies of the next targeted band fall within the overall occupied spectrum, and exclude any such occupied center frequencies from the target center frequency set assigned to cell search circuit **206b** for search in the next targeted band. As such center frequencies have already determined to be occupied by cells that were previously detected on other bands, cell search circuit **206b** may avoid redundant searches of center frequencies that cannot contain a cell, and thus may save time and power during cell search. Control circuit **206a** may implement this exclusion by generating an initial target center frequency set for the next targeted band and excluding any identified occupied center frequencies from the initial target center frequency set or by selecting only non-occupied initial center frequencies from the overall set of center frequencies of the next targeted band.

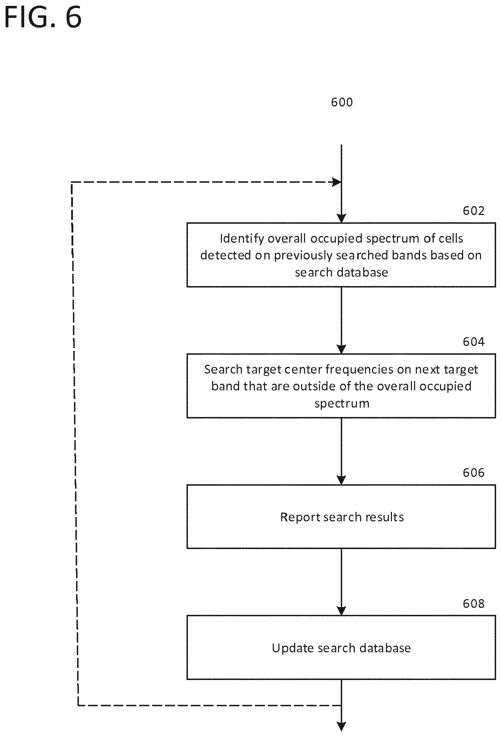

FIG. **6** shows method **600**, which baseband system **206** may perform in order to avoid redundant searches for target center frequencies which are occupied by previously detected cells on other operating bands. As will be detailed, baseband system **206** may avoid searching target center frequencies that directly fall within occupied spectrum of cells previously detected on other bands (including certain center frequencies that immediately neighbor the cell bandwidth of previously detected cells), i.e. target center frequencies that are directly occupied by previously detected cells on other bands. Baseband system **206** may additionally avoid searching target center frequencies that are paired with (i.e. as part of paired FDD spectrum) target center frequencies that directly fall within occupied spectrum of cells previously detected on other bands (including certain center frequencies that immediately neighbor the cell bandwidth of previously detected cells), i.e. target center frequencies that are indirectly occupied by previously detected cells on other bands. This includes target center frequencies that are located within the uplink region of previously detected cells on other bands in addition to target center frequencies whose associated uplink center frequencies are located within the uplink region of previously detected cells on other bands.

As shown in FIG. **6**, control circuit **206a** may first identify occupied spectrum of cells previously detected during search of other bands in **602**. Specifically, control circuit **206a** may identify both paired and occupied spectrum occupied by cells detected on previously searched bands, and may subsequently apply this information to exclude certain target center frequencies from search for unsearched bands.

During cell search of previously searched bands, cell search circuit **206b** may have performed cell search on one or more target center frequencies of each previously searched band, where each target center frequency is limited to the respective downlink subband of each previously searched band. In doing so, cell search circuit **206b** may have detected network cells at one or more of the target center frequencies, where each network cell may be centered at a given downlink center frequency (out of the overall set of target center frequencies) and occupy a certain downlink cell bandwidth surrounding the downlink center frequency. For example, in an LTE context a network cell may have a downlink center frequency and occupy a downlink system bandwidth of between 1.4 - 20 MHz surrounding the center frequency, while UMTS cells may occupy a downlink system bandwidth of 5 MHz surrounding the downlink center frequency. By detecting network cells that are centered at a given target center frequency, cell search circuit **206b** may identify both the downlink center frequency and the downlink spectrum surrounding the downlink center frequency that is occupied by one (or more depending on the frequency re-use factor) network cells on the corresponding operating band. Search engine circuit **206b** may thus detect different ranges of occupied downlink spectrum on a given band by detecting cells, where each range of occupied downlink spectrum is occupied by one or more network cells centered at the corresponding downlink center frequency with a downlink cell bandwidth surrounding the downlink center frequency.

Each detected cell that is operating as an FDD cell may additionally have uplink spectrum that is paired with the downlink spectrum on which the cell was detected. For example, a 20 MHz FDD cell detected at a given downlink center frequency may correspond to a paired 20 MHz FDD uplink band centered at a given uplink center frequency that is separated from the downlink center frequency by a duplex spacing. Accordingly, during search of each of the previously searched bands, cell search circuit **206b** may identify both occupied unpaired spectrum (for identified TDD cells) and paired spectrum (for identified FDD cells). For each identified FDD cell, cell search circuit **206b** may identify the occupied paired uplink spectrum by obtaining the duplex spacing and cell bandwidth during cell search (e.g. via reception of system information or via predefined duplex spacing information) of a detected FDD cell.

Cell search circuit **206b** may thus obtain information for each detected cell that identifies the spectrum occupied by the detected cell. Control circuit **206a** may store such information in search database **206c** following result reporting by cell search circuit **206b.** Upon identifying the next targeted band targeted for cell search, control circuit **206a** may be able to identify the overall range of physical spectrum that is occupied by cells previously detected on other bands, i.e. the overall occupied spectrum, in **602**.

In order to improve efficiency, control circuit **206a** may sort the target bands prior to assigning any target bands to cell search circuit **206b** for search in order to have cell search circuit **206b** search target bands that are most likely to have cells first. Accordingly, control circuit **206a** may first evaluate each of the target bands to identify which target bands are most likely to contain cells, and may subsequently order the target bands from the most likely to contain cells to the least likely to contain cells. For example, control circuit **206a** may rely on information such as prior knowledge of which operating bands are deployed in the geographical area of mobile terminal **102** (e.g. which operating bands are deployed in the country that mobile terminal **102** is located in), geographical information for mobile terminal **102** (such as e.g. supplied by GPS), historical data of prior searches (such as e.g. which operating bands were previously found to contain cells), etc. Control circuit **206a** may then assign target bands to cell search circuit **206b** according to this order, which may allow control circuit **206a** to efficiently build the overall occupied spectrum without needing to perform initial searches on entire "empty" bands.

Control circuit **206a** may thus identify the overall occupied spectrum and apply the identified overall occupied spectrum in **602** in order to identify the center frequencies on the next targeted band that fall within the overall occupied spectrum, i.e. are occupied by cells previously detected during search of other bands. As indicated above, control circuit **206a** may identify center frequencies that are either directly or indirectly occupied by previously detected cells on other bands. Control circuit **206a** may then exclude such occupied center frequencies from the target center frequency list supplied to cell search circuit **206b,** i.e. either by removing all identified occupied center frequencies from an initial target center frequency set or by populating an empty list of target center frequencies with center frequencies that do not fall within spectrum occupied by cells previously detected on other bands.

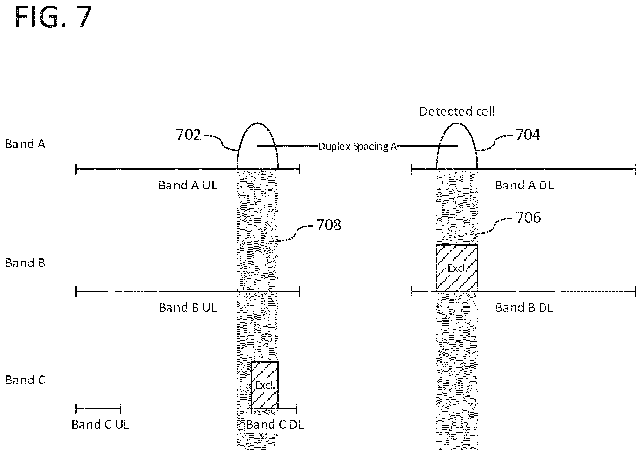

FIG. **7** shows an example of center frequencies that are directly occupied by cells previously detected on other bands. As shown in FIG. **7**, cell search circuit **206b** may detect at least one cell, e.g. a first cell, during cell search of Band A that is utilizing paired downlink spectrum **704**. Cell search circuit **206b** may detect the first cell using established cell search procedures, such as by isolating a received signal at a given target center frequency and processing the isolated signal to detect any cells in addition to obtaining basic information about the detected cells. Such may include comparing the isolated signal to predefined local reference signals (such as e.g. Primary Synchronization Signals (PSSs) and Secondary Synchronization Signals (SSSs) to identify physical cell identity information and/or reading system information from initially detected cells in order to identify cell parameters such as scheduling information, Public Land Mobile Network (PLMN) identity, system bandwidth, duplex mode, duplex spacing, etc.

Method **600** will now be detailed in reference to the exemplary center frequency scenario depicted in FIG. **7**. Cell search circuit **206b** may report such cell identity parameters identified for the first cell as search results for Band A to control circuit **206a** in **606,** which may store the search results in search database **206c** in **608.** As the detected first cell is using paired downlink spectrum **704**, either cell search circuit **206b** or control circuit **206a** may calculate the corresponding paired uplink spectrum **702** according to the downlink center frequency, the first cell bandwidth, and the duplex spacing of the first cell. As the first cell is actively using paired uplink and downlink spectrum **702** and **704,** control circuit **206a** may store information for both paired uplink and downlink spectrum **702** and **704** in search database **206c** to indicate the occupied spectrum of the first cell. Although not explicitly shown in FIG. **7**, cell search circuit **206b** may additionally detect network cells with different occupied spectrum during search of the first band and similarly store information detailing such occupied spectrum in search database **206c.** Furthermore, while FIG. **7** depicts the occupied spectrum of the first cell as paired FDD spectrum, cell search circuit **206b** may additionally detect TDD cells and subsequently determine the occupied spectrum as the cell bandwidth surrounding the corresponding center frequency, i.e. as only the unpaired TDD spectrum.

Accordingly, control circuit **206a** may identify the center frequencies of Band B that overlap with occupied spectrum of cells previously detected by cell search circuit **206b** during search of band A (in addition to any other previously searched bands), i.e. that are directly occupied by the occupied spectrum of Band A. Control circuit **206a** may then exclude any such center frequencies from the target center frequency set assigned to cell search circuit **206b.** As shown in FIG. **7**, control circuit **206a** may identify directly occupied spectrum **706** of Band B, which overlaps with paired downlink spectrum **704** of the first cell as detected during search of Band A. As directly occupied spectrum **706** is directly occupied by a cell on a different operating band, it may not be possible for any cells to simultaneously utilize occupied spectrum **706** on Band B (or any band other than Band A) and thus any search by cell search circuit **206b** on directly occupied spectrum **706** may be unnecessary. Accordingly, control circuit **206a** may identify spectrum that is directly occupied by cells previously detected on other bands, identify any target center frequencies in the next target band that overlap with the directly occupied spectrum, and exclude the occupied center frequencies from search. Control circuit **206a** may thus exclude the occupied center frequencies from the target center frequency set assigned by cell search circuit **206b.**

Search engine circuit **206b** may then search the assigned target center frequencies for the next target band in **604**. As control circuit **206a** has excluded any center frequencies that fall within spectrum that is directly occupied by cells previously detected on other bands (e.g. occupied spectrum **706**), search engine circuit **206b** may perform cell search only on target center frequencies for the next band (e.g. Band B) that fall outside of the directly occupied spectrum. It is noted that the target center frequencies for a given band may be limited only to downlink center frequencies (i.e. in the downlink subband).

Search engine circuit **206b** may thus perform cell search at each of the target center frequencies for the next target band in **604** and subsequently report all obtained search results to control circuit **206a** in **606,** which may include cell identity information (e.g. Physical Cell Identity (PCI) for LTE, Primary Scrambling Code (PSC) for UMTS, Base Station Identity Code (BSIC) for GSM, etc.), scheduling information, Public Land Mobile Network (PLMN) identity, system bandwidth, duplex mode, duplex spacing, etc. Control circuit **206a** may then store the search results in search database **206c** to update search database **206c** in **608.** Search database **206c** may thus contain information such as center frequency, duplex spacing, and system bandwidth for the detected cells of each searched band, which may be subsequently employed by control circuit **206a** to identify the occupied spectrum of detected cells and subsequently identify and exclude any occupied center frequencies from search for other bands.

As shown in FIG. **6**, baseband system **206** may repeat method **600** to search the next band, such as e.g. Band C as shown in FIG. **7**. In the exemplary scenario of FIG. **7**, cell search circuit **206b** may detect the first cell on Band A and not detect any cells on Band B. Accordingly, control circuit **206a** may identify the overall occupied spectrum as paired uplink and downlink spectrum **702** and **704** prior to initiating cell search on Band C.

As shown in FIG. **7**, both the uplink and downlink subbands of Band C may fall within the uplink subband of Band B. Accordingly, control circuit **206a** may identify the spectrum of Band C that overlaps with directly occupied spectrum **708** and subsequently exclude such directly occupied spectrum from search in Band C. Control circuit **206a** may thus identify any center frequencies for Band C that fall within directly occupied spectrum **708** and exclude such center frequencies from the target center frequency set assigned to cell search circuit **206b** for search on Band C. Cell search circuit **206b** may thus only search target center frequencies for Band C that fall outside of directly occupied spectrum **708**.

Accordingly, cell search circuit **206b** may avoid searching any center frequencies that are directly occupied by downlink or uplink spectrum of a cell previously detected on another band. By skipping search of such center frequencies, cell search circuit **206b** may avoid performing unnecessary cell search on center frequencies that can not contain any cells, thus saving power and reducing search time.

Baseband system **206** may additionally identify center frequencies that are paired with spectrum that is directly occupied by cells previously detected on another band, i.e. center frequencies that are indirectly occupied by cells previously detected on another band. For example, if a cell detected on another band has previously been identified as utilizing paired uplink spectrum, it may not be possible for a cell on another band to utilize the downlink spectrum paired with the uplink spectrum. Cell search circuit **206b** may thus avoid unnecessarily searching such target center frequencies during cell search on subsequent bands.

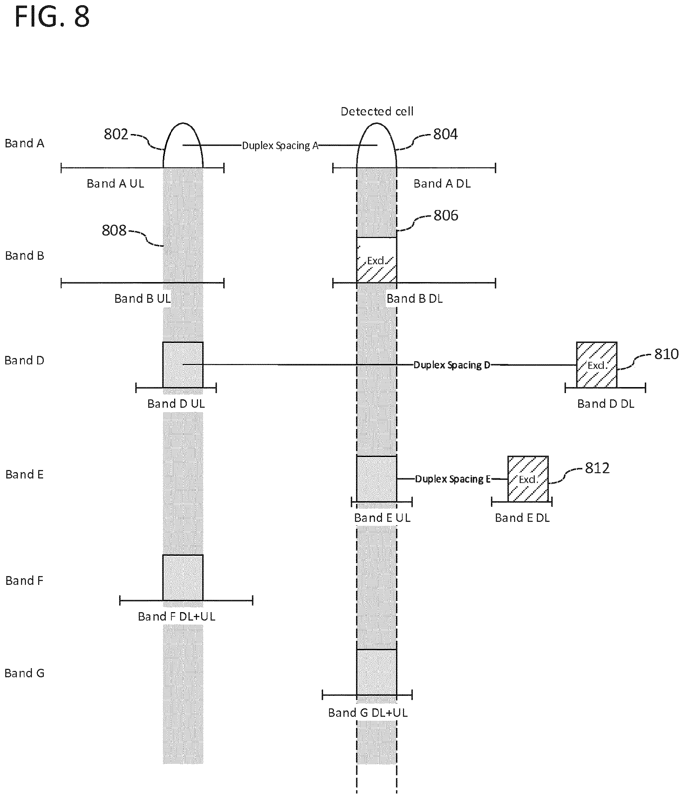

FIG. **8** shows an exemplary scenario in which baseband system **206** may avoid performing cell search on center frequencies that are directly or indirectly occupied by cells previously detected on other bands. As shown in FIG. **8**, cell search circuit **206b** may similarly search Band A and detect a first cell occupying paired uplink and downlink spectrum **802** and **804.** Cell search circuit **206b** may thus identify the center frequency, cell bandwidth, and duplex spacing (in addition to other search result information) for the first cell, which control circuit **206a** may subsequently store in search database **206c.**

Similarly as detailed above regarding FIG. **7**, control circuit **206a** may identify the center frequencies of Band B that are occupied by detected cells on Band A, i.e. occupied by occupied spectrum **806** or **808,** and exclude such center frequencies from the target center frequency set assigned to cell search circuit **206b** for Band B. Cell search circuit **206b** may proceed to perform cell search on the assigned target center frequencies of Band B and report any search results to control circuit **206a** for storage in search database **206c.**

Control circuit **206a** may proceed to trigger cell search for Band D at cell search circuit **206b.** Accordingly, control circuit **206a** may first identify the occupied spectrum of all previously searched bands, i.e. the overall occupied spectrum of occupied spectrum **802** and **804.** In the exemplary scenario of FIG. **8**, cell search circuit **206b** may not have detected any cells on the searched target center frequencies of Band B; however, in alternative scenarios cell search circuit **208b** may detect cells on Band B, thus allowing control circuit **206a** to consider the occupied spectrum of such cells in excluding certain target center frequencies from search.

As shown in FIG. **8**, paired downlink spectrum **804** of the first cell detected during search of Band A may not overlap with the paired downlink subband of Band D, and accordingly none of the downlink center frequencies of Band D may be directly occupied by the first cell. However, as shown in FIG. **8** occupied spectrum **808** may fall within the paired uplink subband of Band D. As a result, given a certain duplex spacing for Band D it may not be possible for any cells on Band D to exist on the downlink spectrum that is paired with the uplink spectrum that overlaps with occupied spectrum **808**. Accordingly, certain downlink center frequencies of Band D may be indirectly occupied by occupied spectrum **808**.

Control circuit **206a** may identify thus the spectrum of Band D that is directly occupied by cells detected on other bands, e.g. occupied spectrum **808** of Band D. As occupied spectrum **808** of the uplink subband of Band D is occupied by the first cell of Band A, control circuit **206a** may determine that the corresponding paired downlink spectrum, i.e. indirectly occupied spectrum **810**, on the downlink subband of Band D cannot be occupied by any cell of Band D. Control circuit **206a** may identify indirectly occupied spectrum **810** by adding the duplex spacing for Band D to the uplink center frequency of the first cell. Control circuit **206a** may then identify the block of frequencies with a width of the cell bandwidth of the first cell centered at the sum of the uplink center frequency of the first cell and the duplex spacing for Band D as indirectly occupied spectrum **810** (including certain directly neighboring center frequencies as further detailed below). As the uplink spectrum paired with indirectly occupied spectrum **810** is occupied by occupied spectrum **808**, it may not be possible for any cell to exist on Band D on indirectly occupied spectrum **810**. Control circuit **206a** may therefore identify indirectly occupied spectrum **810** as part of the overall occupied spectrum and exclude any center frequencies that fall within indirectly occupied spectrum **810** from the target center frequency list assigned to cell search circuit **206b** for Band D.

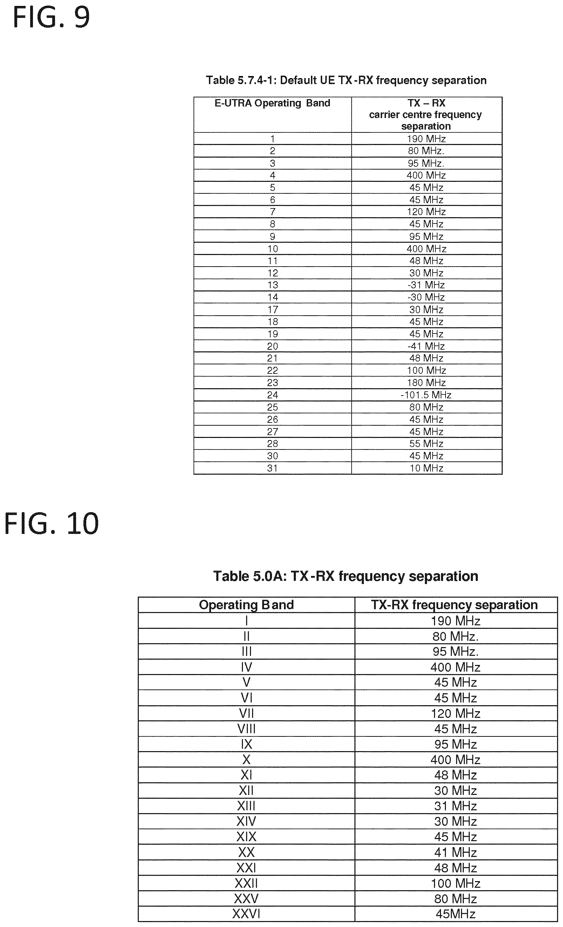

In identifying indirectly occupied spectrum **810**, control circuit **206a** may rely on prior knowledge of the duplex spacing of the Band D. For example, FIG. **9** shows Table 6.7.4-1: "Default UE TX-RX frequency separation" of 3GPP TS 36.101, which defines the duplex spacing (i.e. transmit-receive frequency separation) for each paired LTE FDD operating band. Such duplex spacings may be similarly predefined for a number of standardized radio access technologies, such as e.g. for UMTS as specified in FIG. **10** depicting Table 5.0A: "TX-RX frequency separation" of 3GPP TS 25.101 for each UMTS FDD operating band.

Accordingly, control circuit **206a** may be able to calculate both the directly occupied and indirectly occupied spectrum for unsearched target bands based on the downlink center frequency and cell bandwidth of a detected cell on another band and subsequently include all such spectrum in the overall occupied spectrum. Similar to as detailed for Band D, control circuit **206a** may identify indirectly occupied spectrum **812** to exclude from search of Band E based on directly occupied spectrum **806**, as directly occupied spectrum **806** may overlap with the uplink spectrum paired to indirectly occupied spectrum **812** according to the duplex spacing of Band E. Control circuit **206a** may thus identify indirectly occupied spectrum **812** by adding the duplex spacing for Band E with the downlink center frequency of the first cell and determining indirectly occupied spectrum **812** as the block of spectrum with a width of the cell bandwidth of the first cell centered at the resulting frequency. As indirectly occupied spectrum **812** cannot contain any cells on Band E, control circuit **206a** may exclude any center frequencies falling within indirectly occupied spectrum **812** from the target center frequency set assigned to cell search circuit **206b** for Band E. Control circuit **206a** may similarly be able to exclude TDD cells based on directly occupied spectrum **806** and/or directly occupied spectrum **808**. As shown in FIG. **8**, Band F may be a TDD band that overlaps with the uplink subband of FDD Band A, and may accordingly contain spectrum that overlaps with directly occupied spectrum **808**. Similarly, Band G may be a TDD band that overlaps with the downlink subband of FDD Band A, and may consequently contain spectrum that overlaps with directly occupied spectrum **806**. Control circuit **206a** may thus exclude such center frequencies on Band F and Band G from search.

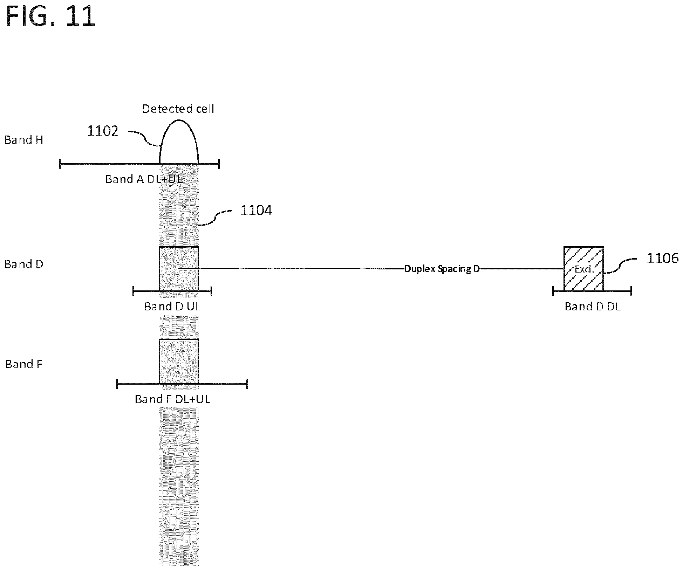

Control circuit **206a** may additionally employ detected TDD cells to exclude directly and indirectly occupied spectrum from search. As shown in FIG. **11**, cell search circuit **206b** may detect a cell on TDD Band H that is active on unpaired spectrum **1102.** The detected cell may thus additionally occupy directly occupied spectrum **1104,** which overlaps with the paired uplink band of Band D. Accordingly, control circuit **206** may employ the duplex spacing for Band D in order to identify indirectly occupied spectrum **1106** in the downlink subband of Band D, which may not be able to be employed for any cells on Band D due to the detected use of the paired uplink spectrum by the detected cell on Band H. Control circuit **206a** may similarly be able to identify both TDD and FDD center frequencies that are overlapped by directly occupied spectrum **1104** of the detected cell on Band H, such as e.g. for spectrum on TDD Band F as shown in FIG. **11**. Control circuit **206a** may thus apply the techniques detailed herein for both TDD and FDD bands.

Control circuit **206a** may thus avoid unnecessary searching of center frequencies that are occupied by cells previously detected on other operating bands by evaluating previous search results stored in search database **206c** to identify both directly occupied spectrum (i.e. occupied by a cell on another band) or indirectly occupied spectrum (i.e. paired with uplink spectrum that is occupied by a cell on another band) and including all such spectrum in the overall occupied spectrum. Control circuit **206a** may then identify any center frequencies for a next targeted band that fall within the overall occupied spectrum and exclude such center frequencies from the target center frequency set assigned to cell search circuit **206b,** thus reducing search time and conserving power.

Although not clearly depicted in the un-scaled representation of FIG. **8**, control circuit **206a** may be able to additionally identify certain center frequencies that directly neighbor the cell bandwidth of cells detected on other bands as part of the overall occupied spectrum. As previously indicated, LTE center frequencies may be positioned on a 100 kHz grid, i.e. a 100 kHz channel raster, while UMTS center frequencies may be positioned on a 200 kHz grid, i.e. a 200 kHz channel raster. Other standardized radio access technologies may have analogous channel rasters.

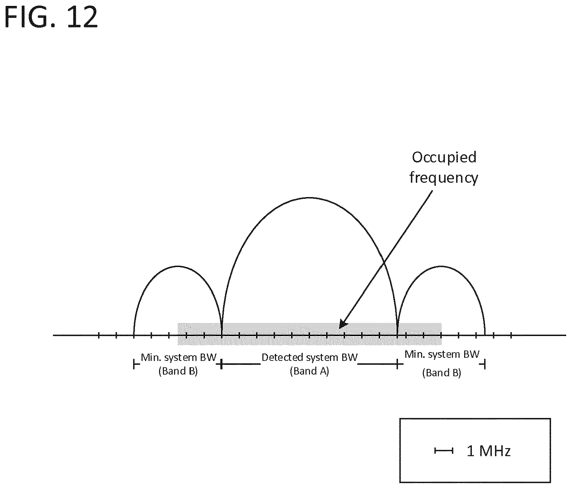

Each radio access technology may additionally have a minimum system bandwidth. For example, LTE system bandwidth has a scalable range between 1.4 -20 MHz while UMTS system bandwidth is fixed at 5 MHz. Accordingly, referring to the exemplary scenario of FIG. **8**, cell search circuit **206b** may detect an LTE cell with a system bandwidth of e.g. 10 MHz as the first cell on Band A (which may thus be an LTE operating band), and control circuit **206a** may subsequently identify center frequencies that are occupied by the cell bandwidth of the first cell (both the paired uplink and downlink spectrum if the first cell is an FDD cell) to exclude during search of subsequent bands. Control circuit **206a** may subsequently trigger search for Band B at cell search circuit **206b,** where Band B may be a UMTS operating band. Accordingly, potential cells on Band B must satisfy the UMTS-specific criteria of being located on a 200 kHz raster and having a 5 MHz system bandwidth. Accordingly, assuming an aligned LTE-UMTS raster, the closest possible center frequency for a UMTS cell on Band B may be ± 7.6 MHz on either side of the center frequency of the LTE cell detected on Band A as shown in FIG. **12**. Analogous scenarios may be realized for various different combinations of radio access technologies, such as for LTE cells which must be located on a 100 kHz raster with a minimum system bandwidth of 1.4 MHz. Accordingly, when targeting a particular band for search, control circuit **206a** may calculate the occupied spectrum of a previously detected cell based on the center frequency assignment characteristics of the radio access technology of the currently targeted band, where certain center frequencies that directly neighbor the cell bandwidth of the detected cell may additionally be included in the occupied spectrum. Control circuit **206a** may thus identify the center frequencies to exclude as all center frequencies of the targeted band that either fall within the cell bandwidth of the detected cell or that are separated from the cell bandwidth of the detected cell by less than half of the minimum cell bandwidth of the radio access technology of the targeted band.

Additionally, it is noted that in certain scenarios operators may deploy neighboring cells that overlap in the frequency domain, and consequently may rely on robust decoding capabilities to allow mobile terminals to decode desired downlink signals in spite of the added interference from overlapping neighbor cells. Accordingly, the occupied frequency depicted in FIG. **12** may in certain scenarios be horizontally condensed if neighboring cells are deployed with overlapping cell bandwidth. Control circuit **206a** may accordingly rely on prior knowledge as to such (if available) in order to determine the occupied spectrum of detected cells.

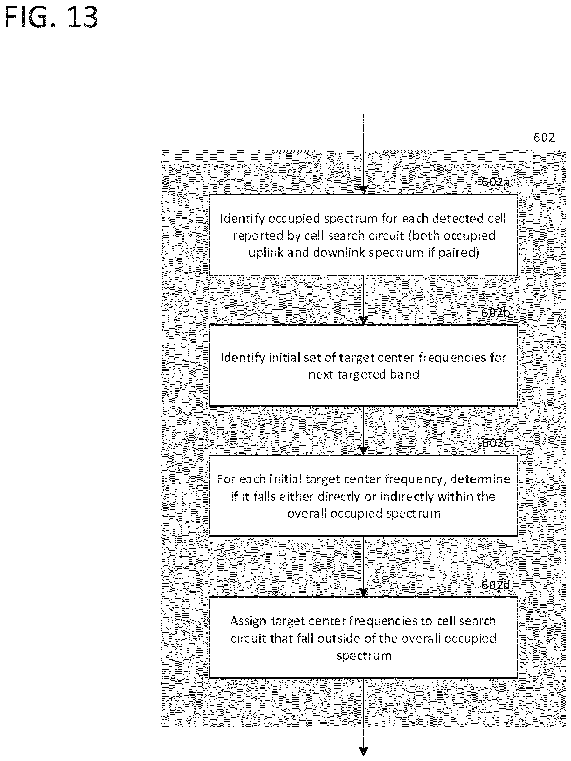

FIG. **13** shows the identification and assignment process performed by control circuit **206a** in **602** of method **600** in further detail. As shown in FIG. 13, in preparing to trigger search for the next targeted band at cell search circuit **206b,** control circuit **206a** may first identify the overall occupied spectrum for all detected cells on other bands previously reported by cell search circuit **206b.** In order to identify the overall occupied spectrum, control circuit **206a** may access search database **206c** to identify each detected cell reported by cell search circuit **206b** and obtain the downlink center frequency, system bandwidth, and associated operating band for each detected cell. Control circuit **206a** may then calculate the occupied spectrum for each detected cell. For detected TDD cells, control circuit **206a** may calculate the occupied spectrum as the block of spectrum with a width of the cell bandwidth surrounding the downlink center frequency. For detected FDD cells, control circuit **206a** may need to calculate the occupied spectrum as both the paired downlink and uplink spectrum, and accordingly may calculate the uplink center frequency by subtracting the duplex spacing (as predefined by the corresponding operating band of the detected cell) from the downlink center frequency. Control circuit **206a** may then calculate the occupied spectrum as the block of spectrum with a width of the cell bandwidth surrounding the downlink center frequency and the block of spectrum with a width of the cell bandwidth surrounding the uplink center frequency. As detailed regarding FIG. **12**, control circuit **206a** may additionally include certain frequencies that neighbor the frequencies actually occupied by each detected cell in the occupied spectrum for each detected cell, which control circuit **206a** may identify based on the channel raster and minimum cell bandwidth of the radio access technology of the next targeted band. While many FDD operating bands use uplink subbands that are located at lower frequencies than the paired downlink subbands (thus facilitating subtraction of the duplex spacing from the downlink subband to identify the paired uplink subband), other contexts may alternatively employ uplink subbands that are located at higher frequencies than the paired downlink subbands. As such maybe predefined per operating band, control circuit **206a** may either add or subtract the duplex spacing from the downlink subband depending on the particular operating band configuration in order to identify the paired uplink subband.

Control circuit **206a** may thus calculate the occupied spectrum for each detected cell reported by cell search circuit **206b** on different operating bands from the next targeted band and subsequently identify the overall occupied spectrum for all other bands in **602a** as the aggregated of the occupied spectrum for all cells previously detected in other bands. Control circuit **206a** may then identify an initial set of target center frequencies for the next targeted band in **602b,** which may depend on the particular mobility scenario associated with the cell search and may vary across a variety of different scenarios. As previously indicated, each target center frequency may be a downlink center frequency, i.e. may be located in the downlink subband of the next targeted band.

Control circuit **206a** may then determine in **602c** if any of the initial target center frequencies is directly or indirectly overlapped by the overall occupied spectrum identified in **602b.** Accordingly, control circuit **206a** may compare the physical center frequency of each of the initial target center frequencies with the overall occupied spectrum to determine if any of the initial target center frequencies either overlaps with the overall occupied spectrum (i.e. directly occupied according to condition (a)) or is paired with an uplink center frequency that overlaps with the overall occupied spectrum (i.e. indirectly occupied according to condition (b)). If the next targeted band is an unpaired band, e.g. a TDD operating band, control circuit **206a** may increment through each of the initial target center frequencies and compare each initial target center frequency to the overall occupied spectrum in order to determine whether each initial target center frequency falls within the overall occupied spectrum. If the next targeted band is a paired band, e.g. an FDD operating band, control circuit **206a** may similarly increment through each of the initial target center frequencies and compare each initial target center frequency to the overall occupied spectrum in order to determine whether each initial target center frequency falls within the overall occupied spectrum, i.e. whether each initial target center frequency is directly occupied by the overall occupied spectrum. Control circuit **206a** may additionally calculate the corresponding uplink center frequency paired with each initial target center frequency by subtracting the duplex spacing of the targeted band from the initial target center frequency and may proceed to compare the paired corresponding uplink center frequency with the overall occupied spectrum to determine whether each initial target center frequency indirectly overlaps with the overall occupied spectrum.

Control circuit **206a** may thus determine in **602c** whether each initial target center frequency is directly or indirectly occupied by any cells previously detected on another band. Control circuit **206a** may then in **602d** assign the target center frequencies of the initial set of target center frequencies that fall outside of the overall occupied spectrum to cell search circuit **206b** for search. Accordingly, cell search circuit **206b** may proceed to search target center frequencies on the next targeted band that are outside of the overall occupied spectrum in **604**, and in doing so may avoid unnecessary searches on target center frequencies that are already occupied by detected cells on other bands. Baseband system **206** may continuously repeat method **600** for each subsequent targeted band, and accordingly may obtain cell search results as stored in search database **206c** that may be employed for a variety of mobility procedures, such as e.g. cell selection/reselection, handover, network scan/selection, measurement reporting, etc.

As previously indicated, method **600** may apply for cell search that is limited to only a single radio access technology, i.e. for cell search on overlapping operating bands of a single radio access technology, or for cell searches over multiple radio access technologies, i.e. for cell search on overlapping bands of more than one radio access technology.

Depending on certain further assumptions regarding band deployment in a given geographic area, control circuit **206a** may be able to identify broader ranges of frequencies as part of the overall occupied spectrum. For example, it may be rare for a geographic area, such as e.g. a country, to simultaneously deploy two operating bands that contain a spectral overlap. As an example, MNOs may not deploy both LTE Operating Band 1 and LTE Operating Band 2 in the same country as the uplink subband of LTE Operating Band 1 overlaps with the downlink subband of LTE Operating Band 2. Accordingly, control circuit **206a** may determine the occupied spectrum for a given detected cell as the entire bandwidth of any different operating bands that overlap with the cell bandwidth of the detected cell. Accordingly, in identifying the occupied spectrum for each previously detected cell in **602a,** control circuit **206a** may compare the cell bandwidth of each detected cell to the frequency range of the next targeted band. If any of the detected cells have a cell bandwidth that overlaps with the next targeted band (as occupied uplink or downlink spectrum of the detected cell with either the uplink or downlink subband of the next targeted band), control circuit **206a** may declare that the occupied spectrum of the corresponding detected cells contains the entirety of the next targeted band and subsequently exclude the entire next targeted band (i.e. each center frequency of the next targeted band) from search.

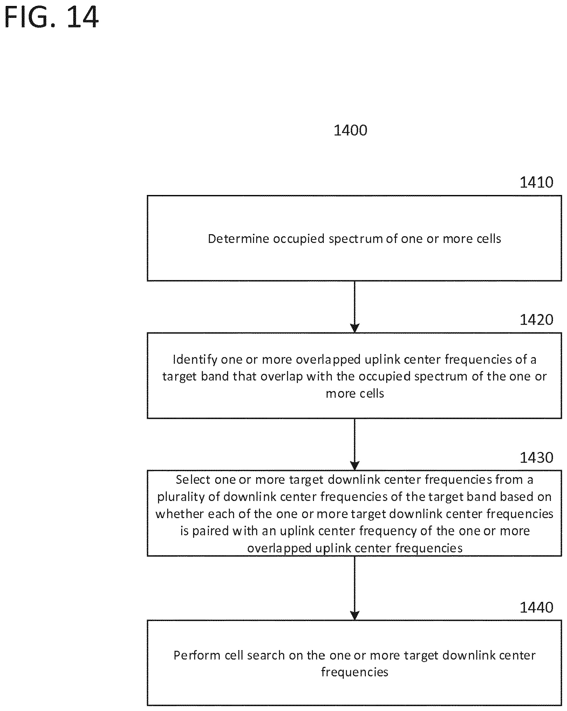

FIG. **14** shows method **1400** for performing radio communications. As shown in FIG. **14**, method **1400** includes determining occupied spectrum of one or more cells **(1410),** identifying one or more overlapped uplink center frequencies of a target band that overlap with the occupied spectrum of the one or more cells **(1420),** selecting one or more target downlink center frequencies from a plurality of downlink center frequencies of the target band based on whether each of the one or more target downlink center frequencies is paired with an uplink center frequency of the one or more overlapped uplink center frequencies **(1430),** and performing cell search on the one or more target downlink center frequencies **(1440).**

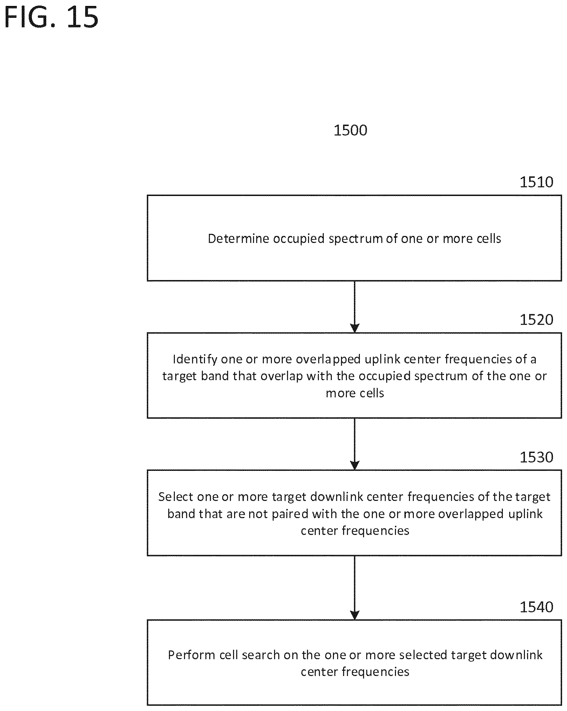

FIG. **15** shows method **1500** for performing radio communications. As shown in FIG. **15**, method **1500** includes determining occupied spectrum of one or more cells **(1510),** identifying one or more overlapped uplink center frequencies of a target band that overlap with the occupied spectrum of the one or more cells (**1520**), selecting one or more target downlink center frequencies of the target band that are not paired with the one or more overlapped uplink center frequencies (**1530**), and performing cell search on the one or more target downlink center frequencies (**1540**).

In one or more further exemplary aspects of the disclosure, one or more of the features described above in reference to FIGS. **1-11** may be further incorporated into method **1400** and/or method **1500.** In particular, method **1400** and/or method **1500** may be configured to perform further and/or alternate processes as detailed regarding mobile terminal **102**, baseband modem **206**, control circuit **206a,** and/or cell search circuit **206b.**

The terms "user equipment", "UE", "mobile terminal", "user terminal", etc., may apply to any wireless communication device, including cellular phones, tablets, laptops, personal computers, wearables, multimedia playback devices, consumer/home/office/commercial appliances, vehicles, etc., and any number of additional electronic devices capable of wireless communications.

While the above descriptions and connected figures may depict electronic device components as separate elements, skilled persons will appreciate the various possibilities to combine or integrate discrete elements into a single element. Such may include combining two or more circuits to form a single circuit, mounting two or more circuits onto a common chip or chassis to form an integrated element, executing discrete software components on a common processor core, etc. Conversely, skilled persons will recognize the possibility to separate a single element into two or more discrete elements, such as splitting a single circuit into two or more separate circuits, separating a chip or chassis into discrete elements originally provided thereon, separating a software component into two or more sections and executing each on a separate processor core, etc.

It is appreciated that implementations of methods detailed herein are demonstrative in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include one or more components configured to perform each aspect of the related method.

All acronyms defined in the above description additionally hold in all claims included herein.

While the invention has been particularly shown and described with reference to specific embodiments, it should be understood by those skilled in the art that various changes in form and detail may be made therein without departing from the scope of the invention as defined by the appended claims. The scope of the invention is thus indicated by the appended claims and all changes which come within the meaning and range of equivalency of the claims are therefore intended to be embraced.

## Claims

1. A communication circuit arrangement comprising:
a control circuit (206a) configured to:
determine occupied spectrum of one or more cells;
identify one or more overlapped uplink center frequencies of a target band that overlap with the occupied spectrum of the one or more cells; and
select one or more target downlink center frequencies from a plurality of downlink center frequencies of the target band based on whether each of the one or more target downlink center frequencies is paired with an uplink center frequency of the one or more overlapped uplink center frequencies,
the communication circuit arrangement further comprising a cell search circuit (206b) configured to perform cell search on the one or more target downlink center frequencies.

2. The communication circuit arrangement of claim 1, further comprising a radio transceiver (204) and an antenna system (202).

3. The communication circuit arrangement of claim 2, configured as a mobile terminal (102).

4. The communication circuit arrangement of any one of claims 1 to 3, wherein the cell search circuit (206b) is configured to perform cell search on one or more additional target bands to detect the one or more cells prior to the control circuit (206a) determining the occupied spectrum of the one or more cells.

5. The communication circuit arrangement of any one of claims 1 to 4, wherein the control circuit (206a) is configured to determine the occupied spectrum of the one or more cells by:
for each respective cell of the one or more cells:
identifying a downlink subband and an uplink subband or identifying an unpaired band of the respective cell; and
identifying the occupied spectrum of the respective cell as the spectrum composed of the respective downlink subband and the respective uplink subband or the respective unpaired band,
wherein the occupied spectrum of the one or more cells comprises the occupied spectrum of each respective cell of the one or more cells.

6. The communication circuit arrangement of any one of claims 1 to 5, wherein the control circuit (206a) is configured to select the one or more target downlink center frequencies from the plurality of downlink center frequencies of the target band based on whether each of the one or more target downlink center frequencies is paired with an uplink center frequency of the one or more overlapped uplink center frequencies by:
identifying one or more downlink center frequencies of the plurality of downlink center frequencies that are not paired with the one or more overlapped uplink center frequencies as the one or more target downlink center frequencies.

7. The communication circuit arrangement of any one of claims 1 to 5, wherein the control circuit (206a) is configured to select the one or more target downlink center frequencies from the plurality of downlink center frequencies of the target band based on whether each of the one or more target downlink center frequencies is paired with an uplink center frequency of the one or more overlapped uplink center frequencies by:
separating the plurality of downlink center frequencies into a first set of downlink center frequencies that are not paired with the one or more overlapped uplink center frequencies and a second set of downlink center frequencies that are paired with the one or more overlapped uplink center frequencies; and
selecting the one or more target downlink center frequencies from the second set of center frequencies.

8. The communication circuit arrangement of claim 7, wherein the control circuit (206a) is configured to separate the plurality of downlink center frequencies into the first set of downlink center frequencies that are not paired with the one or more overlapped uplink center frequencies and the second set of downlink center frequencies that are paired with the one or more overlapped uplink center frequencies by:
identifying a duplex spacing of the target band; and
identifying the second set of downlink center frequencies according to the one or more overlapped uplink center frequencies and the duplex spacing.

9. The communication circuit arrangement of any one of claims 1 to 8, wherein the cell search circuit (206b) is further configured to detect one or more target cells on the one or more target downlink center frequencies,
and wherein the control circuit (206a) is further configured to perform mobility operations with at least one of the one or more target cells or at least one of the one or more cells.

10. The communication circuit arrangement of claim 9, wherein the control circuit (206a) is configured to perform mobility operations with the at least one of the one or more target cells or the at least one of the one or more cells by:
performing at least one of cell selection, cell reselection, cell measurement, handover, or network selection with at least one of the one or more cells or the one or more target cells.

11. A method of performing radio communications, the method comprising:
determining (1410, 1510) occupied spectrum of one or more cells;
identifying (1420, 1520) one or more overlapped uplink center frequencies of a target band that overlap with the occupied spectrum of the one or more cells;
selecting (1430, 1530) one or more target downlink center frequencies from a plurality of downlink center frequencies of the target band based on whether each of the one or more target downlink center frequencies is paired with an uplink center frequency of the one or more overlapped uplink center frequencies; and
performing (1440, 1540) cell search on the one or more target downlink center frequencies.

12. The method of claim 11, wherein determining (1410, 1510) the occupied spectrum of the one or more cells comprises:
for each respective cell of the one or more cells:
identifying a downlink subband and an uplink subband or identifying an unpaired band of the respective cell; and
identifying the occupied spectrum of the respective cell as the spectrum composed of the respective downlink subband and the respective uplink subband or the respective unpaired band,
wherein the occupied spectrum of the one or more cells comprises the occupied spectrum of each respective cell of the one or more cells.

13. The method of claim 11 or 12, wherein selecting (1430, 1530) the one or more target downlink center frequencies from the plurality of downlink center frequencies of the target band based on whether each of the one or more target downlink center frequencies is paired with an uplink center frequency of the one or more overlapped uplink center frequencies comprises:
identifying one or more downlink center frequencies of the plurality of downlink center frequencies that are not paired with the one or more overlapped uplink center frequencies as the one or more target downlink center frequencies.

14. A non-transitory computer readable medium storing instructions that when executed by a processor of a radio communication device direct the radio communication device to perform the method of any one of claims 11 to 13.

15. The communication circuit arrangement of claim 1, configured as a baseband modem (206).

## Patentansprüche

1. Kommunikationsschaltungsanordnung, umfassend:
eine Steuerschaltung (206a), die konfiguriert ist zum:
Bestimmen eines belegten Spektrums einer oder mehrerer Zellen;
Identifizieren einer oder mehrerer überlappender Uplink-Mittenfrequenzen eines Zielbandes, die sich mit dem belegten Spektrum der einen oder der mehren Zellen überlappen; und
Auswählen einer oder mehrerer Ziel-Downlink-Mittenfrequenzen aus einer Mehrzahl von Downlink-Mittenfrequenzen des Zielbandes basierend darauf, ob jede der einen oder der mehreren Ziel-Downlink-Mittenfrequenzen mit einer Uplink-Mittenfrequenz der einen oder der mehreren überlappenden Uplink-Mittenfrequenzen gepaart ist,
wobei die Kommunikationsschaltungsanordnung ferner eine Zellsuchschaltung (206b) umfasst, die zum Durchführen von Zellsuche auf der einen oder den mehreren Ziel-Downlink-Mittenfrequenzen konfiguriert ist.

2. Kommunikationsschaltungsanordnung nach Anspruch 1, ferner umfassend einen Funksendeempfänger (204) und ein Antennensystem (202).

3. Kommunikationsschaltungsanordnung nach Anspruch 2, konfiguriert als ein mobiles Endgerät (102).

4. Kommunikationsschaltungsanordnung nach einem der Ansprüche 1 bis 3, wobei die Zellsuchschaltung (206b) so konfiguriert ist, dass sie Zellsuche auf einem oder mehreren zusätzlichen Zielbändern durchführt, um die eine oder die mehreren Zellen zu detektieren, bevor die Steuerschaltung (206a) das belegte Spektrum der einen oder der mehreren Zellen bestimmt.

5. Kommunikationsschaltungsanordnung nach einem der Ansprüche 1 bis 4, wobei die Steuerschaltung (206a) so konfiguriert ist, dass sie das belegte Spektrum der einen oder der mehreren Zellen bestimmt durch:
für jede jeweilige Zelle der einen oder der mehreren Zellen:
Identifizieren eines Downlink-Teilbandes und eines Uplink-Teilbandes oder Identifizieren eines ungepaarten Bandes der jeweiligen Zelle; und
Identifizieren des belegten Spektrums der jeweiligen Zelle als das Spektrum, das aus dem jeweiligen Downlink-Teilband und dem jeweiligen Uplink-Teilband des jeweiligen ungepaarten Bandes besteht,
wobei das belegte Spektrum der einen oder der mehreren Zellen das belegte Spektrum jeder jeweiligen Zelle der einen oder der mehreren Zellen umfasst.

6. Kommunikationsschaltungsanordnung nach einem der Ansprüche 1 bis 5, wobei die Steuerschaltung (206a) so konfiguriert ist, dass sie die eine oder die mehreren Ziel-Downlink-Mittenfrequenzen aus einer Mehrzahl von Downlink-Mittenfrequenzen des Zielbandes basierend darauf, ob jede der einen oder der mehreren Ziel-Downlink-Mittenfrequenzen mit einer Uplink-Mittenfrequenz der einen oder der mehreren überlappenden Uplink-Mittenfrequenzen gepaart ist, auswählt durch:
Identifizieren einer oder mehrerer Downlink-Mittenfrequenzen der Mehrzahl von Downlink-Mittenfrequenzen, die nicht mit der einen oder den mehreren überlappenden Uplink-Mittenfrequenzen gepaart sind, als die eine oder die mehreren Ziel-Downlink-Mittenfrequenzen.

7. Kommunikationsschaltungsanordnung nach einem der Ansprüche 1 bis 5, wobei die Steuerschaltung (206a) so konfiguriert ist, dass sie die eine oder die mehreren Ziel-Downlink-Mittenfrequenzen aus einer Mehrzahl von Downlink-Mittenfrequenzen des Zielbandes basierend darauf, ob jede der einen oder der mehreren Ziel-Downlink-Mittenfrequenzen mit einer Uplink-Mittenfrequenz der einen oder der mehreren überlappenden Uplink-Mittenfrequenzen gepaart ist, auswählt durch:
Teilen der Mehrzahl von Downlink-Mittenfrequenzen in einen ersten Satz von Downlink-Mittenfrequenzen, die nicht mit der einen oder den mehreren überlappenden Uplink-Mittenfrequenzen gepaart sind, und einen zweiten Satz von Downlink-Mittenfrequenzen, die mit der einen oder den mehreren überlappenden Uplink-Mittenfrequenzen gepaart sind; und
Auswählen der einen oder der mehreren Ziel-Downlink-Mittenfrequenzen aus dem zweiten Satz von Mittenfrequenzen.

8. Kommunikationsschaltungsanordnung nach Anspruch 7, wobei die Steuerschaltung (206a) so konfiguriert ist, dass sie die Mehrzahl von Downlink-Mittenfrequenzen in den ersten Satz von Downlink-Mittenfrequenzen, die nicht mit der einen oder den mehreren überlappenden Uplink-Mittenfrequenzen gepaart sind, und den zweiten Satz von Downlink-Mittenfrequenzen, die mit der einen oder den mehreren überlappenden Uplink-Mittenfrequenzen gepaart sind, teilt durch:
Identifizieren eines Duplexabstands des Zielbandes; und
Identifizieren des zweiten Satzes von Downlink-Mittenfrequenzen gemäß der einen oder den mehreren überlappenden Uplink-Mittenfrequenzen und dem Duplexabstand.

9. Kommunikationsschaltungsanordnung nach einem der Ansprüche 1 bis 8, wobei die Zellsuchschaltung (206b) ferner zum Detektieren einer oder mehrerer Zielzellen auf der einen oder den mehreren Ziel-Downlink-Mittenfrequenzen konfiguriert ist,
und wobei die Steuerschaltung (206a) ferner zum Durchführen von Mobilitätsoperationen mit mindestens einer der einen oder der mehreren Zielzellen oder mindestens einer der einen oder der mehreren Zellen konfiguriert ist.

10. Kommunikationsschaltungsanordnung nach Anspruch 9, wobei die Steuerschaltung (206a) so konfiguriert ist, dass sie Mobilitätsoperationen mit mindestens einer der einen oder der mehreren Zielzellen oder mindestens einer der einen oder der mehreren Zellen durchführt durch:
Durchführen mindestens eines von Zellauswahl, Zellneuauswahl, Zellmessung, Handover oder Netzwerkauswahl mit mindestens einer der einen oder der mehreren Zellen oder der einen oder der mehreren Zielzellen.

11. Verfahren zur Durchführung von Funkkommunikation, wobei das Verfahren umfasst:
Bestimmen (1410, 1510) eines belegten Spektrums einer oder mehrerer Zellen;
Identifizieren (1420, 1520) einer oder mehrerer überlappender Uplink-Mittenfrequenzen eines Zielbandes, die sich mit dem belegten Spektrum der einen oder der mehren Zellen überlappen;
Auswählen (1430, 1530) einer oder mehrerer Ziel-Downlink-Mittenfrequenzen aus einer Mehrzahl von Downlink-Mittenfrequenzen des Zielbandes basierend darauf, ob jede der einen oder der mehreren Ziel-Downlink-Mittenfrequenzen mit einer Uplink-Mittenfrequenz der einen oder der mehreren überlappenden Uplink-Mittenfrequenzen gepaart ist; und
Durchführen (1440, 1540) von Zellsuche auf der einen oder den mehreren Ziel-Downlink-Mittenfrequenzen.

12. Verfahren nach Anspruch 11, wobei das Bestimmen (1410, 1510) des belegten Spektrums der einen oder der mehren Zellen umfasst:
für jede jeweilige Zelle der einen oder der mehreren Zellen:
Identifizieren eines Downlink-Teilbandes und eines Uplink-Teilbandes oder Identifizieren eines ungepaarten Bandes der jeweiligen Zelle; und
Identifizieren des belegten Spektrums der jeweiligen Zelle als das Spektrum, das aus dem jeweiligen Downlink-Teilband und dem jeweiligen Uplink-Teilband des jeweiligen ungepaarten Bandes besteht,
wobei das belegte Spektrum der einen oder der mehreren Zellen das belegte Spektrum jeder jeweiligen Zelle der einen oder der mehreren Zellen umfasst.

13. Verfahren nach Anspruch 11 oder 12, wobei das Auswählen (1430, 1530) einer oder mehrerer Ziel-Downlink-Mittenfrequenzen aus einer Mehrzahl von Downlink-Mittenfrequenzen des Zielbandes basierend darauf, ob jede der einen oder der mehreren Ziel-Downlink-Mittenfrequenzen mit einer Uplink-Mittenfrequenz der einen oder der mehreren überlappenden Uplink-Mittenfrequenzen gepaart ist, umfasst:
Identifizieren einer oder mehrerer Downlink-Mittenfrequenzen der Mehrzahl von Downlink-Mittenfrequenzen, die nicht mit der einen oder den mehreren überlappenden Uplink-Mittenfrequenzen gepaart sind, als die eine oder die mehreren Ziel-Downlink-Mittenfrequenzen.

14. Nicht-transitorisches computerlesbares Medium, das Anweisungen speichert, die bei Ausführung durch einen Prozessor einer Funkkommunikationsvorrichtung die Funkkommunikationsvorrichtung zum Durchführen des Verfahrens nach einem der Ansprüche 11 bis 13 anweisen.

15. Kommunikationsschaltungsanordnung nach Anspruch 1, konfiguriert als ein Basisbandmodem (206).

## Revendications

1. Agencement de circuit de communication, comprenant :
un circuit de commande (206a) configuré pour :
déterminer un spectre occupé d'une ou de plusieurs cellules ;
identifier une ou plusieurs fréquences centrales de liaison montante en chevauchement d'une bande cible qui se chevauchent avec le spectre occupé des une ou plusieurs cellules ; et
sélectionner une ou plusieurs fréquences centrales de liaison descendante cibles parmi une pluralité de fréquences centrales de liaison descendante de la bande cible selon que chacune des une ou plusieurs fréquences centrales de liaison descendante cibles est appariée avec une fréquence centrale de liaison montante des une ou plusieurs fréquences centrales de liaison montante en chevauchement,
l'agencement de circuit de communication comprenant en outre un circuit de recherche de cellule (206b) configuré pour effectuer une recherche de cellule sur les une ou plusieurs fréquences centrales de liaison descendante cibles.

2. Agencement de circuit de communication selon la revendication 1, comprenant en outre un émetteur-récepteur radio (204) et un système d'antenne (202).

3. Agencement de circuit de communication selon la revendication 2, configuré comme un terminal mobile (102) .

4. Agencement de circuit de communication selon l'une quelconque des revendications 1 à 3, dans lequel le circuit de recherche de cellule (206b) est configuré pour effectuer une recherche de cellule sur une ou plusieurs bandes cibles supplémentaires pour détecter les une ou plusieurs cellules avant que le circuit de commande (206a) ne détermine le spectre occupé des une ou plusieurs cellules.

5. Agencement de circuit de communication selon l'une quelconque des revendications 1 à 4, dans lequel le circuit de commande (206a) est configuré pour déterminer le spectre occupé des une ou plusieurs cellules par :
pour chaque cellule respective des une ou plusieurs cellules :
l'identification d'une sous-bande de liaison descendante et d'une sous-bande de liaison montante ou l'identification d'une bande non appariée de la cellule respective ; et
l'identification du spectre occupé de la cellule respective comme le spectre composé de la sous-bande de liaison descendante respective et de la sous-bande de liaison montante respective ou de la bande non appariée respective,
le spectre occupé des une ou plusieurs cellules comprenant le spectre occupé de chaque cellule respective des une ou plusieurs cellules.

6. Agencement de circuit de communication selon l'une quelconque des revendications 1 à 5, dans lequel le circuit de commande (206a) est configuré pour sélectionner les une ou plusieurs fréquences centrales de liaison descendante cibles parmi la pluralité de fréquences centrales de liaison descendante de la bande cible selon que chacune des une ou plusieurs fréquences centrales de liaison descendante cibles est appariée avec une fréquence centrale de liaison montante des une ou plusieurs fréquences centrales de liaison montante en chevauchement par :
l'identification d'une ou de plusieurs fréquences centrales de liaison descendante de la pluralité de fréquences centrales de liaison descendante qui ne sont pas appariées avec les une ou plusieurs fréquences centrales de liaison montante en chevauchement comme les une ou plusieurs fréquences centrales de liaison descendante cibles.

7. Agencement de circuit de communication selon l'une quelconque des revendications 1 à 5, dans lequel le circuit de commande (206a) est configuré pour sélectionner les une ou plusieurs fréquences centrales de liaison descendante cibles parmi la pluralité de fréquences centrales de liaison descendante de la bande cible selon que chacune des une ou plusieurs fréquences centrales de liaison descendante cibles est appariée avec une fréquence centrale de liaison montante des une ou plusieurs fréquences centrales de liaison montante en chevauchement par :
la séparation de la pluralité de fréquences centrales de liaison descendante en un premier ensemble de fréquences centrales de liaison descendante qui ne sont pas appariées avec les une ou plusieurs fréquences centrales de liaison montante en chevauchement et un deuxième ensemble de fréquences centrales de liaison descendante qui sont appariées avec les une ou plusieurs fréquences centrales de liaison montante en chevauchement ; et
la sélection des une ou plusieurs fréquences centrales de liaison descendante cibles dans le deuxième ensemble de fréquences centrales.

8. Agencement de circuit de communication selon la revendication 7, dans lequel le circuit de commande (206a) est configuré pour séparer la pluralité de fréquences centrales de liaison descendante en premier ensemble de fréquences centrales de liaison descendante qui ne sont pas appariées avec les une ou plusieurs fréquences centrales de liaison montante en chevauchement et en deuxième ensemble de fréquences centrales de liaison descendante qui sont appariées avec les une ou plusieurs fréquences centrales de liaison montante en chevauchement par :
l'identification d'un espacement duplex de la bande cible ; et
l'identification du deuxième ensemble de fréquences centrales de liaison descendante selon les une ou plusieurs fréquences centrales de liaison montante en chevauchement et l'espacement duplex.

9. Agencement de circuit de communication selon l'une quelconque des revendications 1 à 8, dans lequel le circuit de recherche de cellule (206b) est en outre configuré pour détecter une ou plusieurs cellules cibles sur les une ou plusieurs fréquences centrales de liaison descendante cibles,
et dans lequel le circuit de commande (206a) est en outre configuré pour effectuer des opérations de mobilité avec au moins l'une des une ou plusieurs cellules cibles ou au moins l'une des une ou plusieurs cellules.

10. Agencement de circuit de communication selon la revendication 9, dans lequel le circuit de commande (206a) est configuré pour effectuer des opérations de mobilité avec ladite au moins une des une ou plusieurs cellules cibles ou ladite au moins une des une ou plusieurs cellules par :
l'exécution d'au moins un élément parmi une sélection de cellule, une resélection de cellule, une mesure de cellule, un transfert ou une sélection de réseau avec au moins l'une des une ou plusieurs cellules ou des une ou plusieurs cellules cibles.

11. Procédé d'exécution de communications radio, le procédé comprenant :
la détermination (1410, 1510) d'un spectre occupé d'une ou de plusieurs cellules ;
l'identification (1420, 1520) d'une ou de plusieurs fréquences centrales de liaison montante en chevauchement d'une bande cible qui se chevauchent avec le spectre occupé des une ou plusieurs cellules ;
la sélection (1430, 1530) d'une ou de plusieurs fréquences centrales de liaison descendante cibles parmi une pluralité de fréquences centrales de liaison descendante de la bande cible selon que chacune des une ou plusieurs fréquences centrales de liaison descendante cibles est appariée avec une fréquence centrale de liaison montante des une ou plusieurs fréquences centrales de liaison montante en chevauchement ; et
l'exécution (1440, 1540) d'une recherche de cellule sur les une ou plusieurs fréquences centrales de liaison descendante cibles.

12. Procédé selon la revendication 11, dans lequel la détermination (1410, 1510) du spectre occupé des une ou plusieurs cellules comprend :
pour chaque cellule respective des une ou plusieurs cellules :
l'identification d'une sous-bande de liaison descendante et d'une sous-bande de liaison montante ou l'identification d'une bande non appariée de la cellule respective ; et
l'identification du spectre occupé de la cellule respective comme le spectre composé de la sous-bande de liaison descendante respective et de la sous-bande de liaison montante respective ou de la bande non appariée respective,
le spectre occupé des une ou plusieurs cellules comprenant le spectre occupé de chaque cellule respective des une ou plusieurs cellules.

13. Procédé selon la revendication 11 ou 12, dans lequel la sélection (1430, 1530) des une ou plusieurs fréquences centrales de liaison descendante cibles parmi la pluralité de fréquences centrales de liaison descendante de la bande cible selon que chacune des une ou plusieurs fréquences centrales de liaison descendante cibles est appariée avec une fréquence centrale de liaison montante des une ou plusieurs fréquences centrales de liaison montante en chevauchement comprend :
l'identification d'une ou de plusieurs fréquences centrales de liaison descendante de la pluralité de fréquences centrales de liaison descendante qui ne sont pas appariées avec les une ou plusieurs fréquences centrales de liaison montante en chevauchement comme les une ou plusieurs fréquences centrales de liaison descendante cibles.

14. Support non transitoire, lisible par ordinateur, stockant des instructions qui, lorsqu'elles sont exécutées par un processeur d'un dispositif de communication radio, ordonnent au dispositif de communication radio d'effectuer le procédé selon l'une quelconque des revendications 11 à 13.

15. Agencement de circuit de communication selon la revendication 1, configuré comme un modem de bande de base (206).
